(19) Europäisches Patentamt
European Patent Office
Office européen des brevets

(11) EP 0 798 350 B1

(12) **EUROPEAN PATENT SPECIFICATION**

(45) Date of publication and mention of the grant of the patent:
**29.09.1999 Bulletin 1999/39**

(51) Int Cl.[6]: **C09D 5/02**

(21) Application number: **97301611.6**

(22) Date of filing: **11.03.1997**

(54) **Paint composition**

Lackzusammensetzung

Composition de vernis

(84) Designated Contracting States:
**DE FR GB IT NL SE**

(30) Priority: **29.03.1996 JP 9952796**

(43) Date of publication of application:
**01.10.1997 Bulletin 1997/40**

(73) Proprietor: **ROHM AND HAAS COMPANY
Philadelphia, Pennsylvania 19106-2399 (US)**

(72) Inventor: **Sugiyama, Takayuki
Yono-shi, Saitama-pref (JP)**

(74) Representative: **Buckley, Guy Julian et al
ROHM AND HAAS (UK) LTD.
European Operations Patent Department
Lennig House
2 Mason's Avenue
Croydon CR9 3NB (GB)**

(56) References cited:
**US-A- 4 054 717**

- **DATABASE WPIL, no. 94-283 365, DERWENT PUBLICATIONS LTD., London; & JP-A-06 211 911 (SUMITOMO DOW KK)**
- **DATABASE WPIL, no. 77-545 99y, DERWENT PUBLICATIONS LTD., London; & JP-A-52 072 730 (DAINIPPON INK CHEM KK)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

This invention relates to an aqueous paint composition, and more particularly to a paint composition that excels in gloss and quickset property (quicksetness). Known in the prior art as water-based quickset paint composition are those which contain emulsified polymer, polyfunctional amine and volatile base, as described in Japanese Publication (Kokai) No. 157463/91. However, improvement of the above-said composition is needed, and development of a paint composition that can set quickly and has excellent gloss is needed. The present invention provides a novel high gloss, quickset paint composition.

The present invention relates to a paint composition comprising an anionically stabilized latex polymer, a water-soluble or water-dispersible polymer formed from a mixture of monomers containing at least 20% by weight of amine functional group-containing monomers, a sufficient amount of volatile base to raise the pH of the composition to the point where essentially all polyfunctional amine will be in a nonionic state, and pigment, wherein said paint composition has pigment volume concentration (PVC) of 30 or less and total solid concentration of 40 - 80% by weight, and wherein the quantity of amine-containing polymer is from 0.1 to 20% by weight based on the total combined weight of the anionic latex polymer and amine-containing polymer..

In this specification, "quickset property or quicksetness" means an ability of the paint to set quickly, compared to the conventional composition. The terminology "latex" being used in this specification means water-insoluble polymers that can be prepared by conventional polymerization technology such as emulsion polymerization. Latex polymer is formed from monomer or monomer mixture that can form a water-insoluble latex polymer capable of forming a film under a coating condition.

The latex polymer to be used in the aqueous paint composition of this invention must be anionically stabilized. The terminology "latex" being used in this specification means water-insoluble polymers that can be prepared by conventional polymerization technology such as emulsion polymerization. Latex polymer is formed form monomer or monomer mixture that can form a water-insoluble latex polymer capable of forming a film under a coating condition. This invention can be practiced by using a polymer having more complicated form, such as a core-shell polymer particles.

Anionic character of latex polymer can be provided by several methods. The most common method is the method by which anionic surface active agent or dispersing agent is used as the stabilizer during emulsion polymerization, or the method by which such surface active agent or dispersing agent is added to the emulsion after polymerization. Nonionic surface active agent may exist in the anionically stabilized latex during or after polymerization of such latex. Following are available as the useful surface active agent and dispersing agent: salts of aliphatic rosin and naphthenic acid, condensation products of formaldehyde of low molecular weight and naphthene sulfonic acid, carboxylic acid polymers and copolymers having a proper hydrophilic-lipophilic balance, higher alkyl sulfate such as sodium lauryl sulfate, alkyl aryl sulfonate such as dodecylbenzene sulfonate, sodium salt or potassium salt of isopropyl benzenesulfonic acid or isopropyl naphthalenesulfonic acid, sulfosuccinates such as sodium dioctyl sulfosuccinate, alkaline metal salt of higher alkyl sulfosuccinic acid such as sodium octyl sulfosuccinate, sodium N-methyl-N-palmitoyltaurate, sodium oleylisethionate (SIC), alkaline metal salts of alkyl aryl polyethoxyethanol sulfuric acid or sulfonic acid such as sodium t-octylphenoxy polyethoxyethanol sulfate having 1 - 5 oxyethylene units, and other anionic surface active agents and dispersing agents that are known in this technological field.

Another type of latex polymer having anionic character is the type that can be obtained as a result of including a small amount of acidic groups in the polymer. In this case, the acidic group may be in salt form, such as an alkaline metal salt or ammonium salt. Examples of such acidic group are fragment of the initiator, and those derived from maleic acid, vinylsulfonic acid, crotonic acid, acrylic acid, methacrylic acid, itaconic acid and so on.

The third useful type of latex polymer having anionic character is the latex polymers that contain a neutralized basic monomer, such as acrylamide, methacrylamide and so on. Anionic character of latex polymers may be more than one type.

Latex polymers having anionic character can be prepared by the any of conventional methods. Such methods are described clearly in the text relating to this main subject, such as D. C. Blackley "Emulsion Polymerization : Theory and Practice", published in 1975 by Wiley Co., and F. A. Bovey "Emulsion Polymerization" published in 1965 by Interscience Publishers. Latex polymers are polymers or copolymers prepared from the following monomers, such as methyl acrylate, ethyl acrylate, butyl acrylate, 2-ethylhexyl acrylate, decyl acrylate, methyl methacrylate, ethyl methacrylate, butyl methacrylate, styrene, butadiene, ethylene, vinyl acetate, vinyl esters of versatic acid (monocarboxylic acid with a tertiary chain of $C_9$, $C_{10}$, and $C_{11}$)[this vinyl ester is known also as "vinyl versatate"], vinyl chloride, vinyl pyridine, vinylidene chloride, acrylonitrile, chloroprene, acrylic acid, methacrylic acid, itaconic acid, maleic acid, fumaric acid, $\alpha$, $\beta$-ethylenic monomers and its esters. And, polymers and copolymers of acrylic esters and methacrylic esters are particularly desirable.

It is desirable to prepare such polymers and copolymers by the publicly known method such as those illustrated in "Emulsion Polymerization of Acrylic Monomers" published by Rohm and Haas Company, Philadelphia, Pennsylvania, U.S.A., on May, 1966.

Copolymers prepared by using butyl acrylate, methyl methacrylate and 2-ethylhexyl acrylate as the acrylic esters, and acrylic acid and methacrylic acid as the acrylic acids, and using styrene, are used favorably. Preferred Tg of the latex polymers is in 0°C - 70°C range.

The "glass transition temperature" or "Tg" being used in this specification means the glass transition temperature of the polymer calculated by Fox's equation [Bulletin of American Physical Society, 1, 3, page 123 (1956)].

$$\text{Formula 1} \quad 1/Tg = W_1/Tg(1) + W_2/Tg(2)$$

As to the copolymer, $W_1$ and $W_2$ mean the weight fractions of two types of comonomers, and Tg(1) and Tg (2) mean the glass transition temperatures (unit : absolute temperature) of two types of respective homopolymers.

The paint composition of this invention contains water-soluble or water-dispersible polymer formed from a mixture of monomers that contain at least 20% by weight of amine functional group-containing monomer.

Following monomers are available, for example, as the monomers that contain amine functional group:

1) Aminoalkyl vinyl ethers or sulfides where the alkyl group may be linear or branched, having 2 - 3 carbon atoms, and the nitrogen atom may be a primary nitrogen atom, secondary nitrogen atom or tertiary nitrogen atom [Specification, U.S. Patent No. 2,879,178]. In the last example, one of the remaining hydrogen atoms may be substituted by alkyl group, hydroxyalkyl group or alkoxyalkyl group, and its alkyl component may have 1 - 4 carbon atoms, preferably only one carbon atom.

Followings are the specific examples : β-aminoethylvinyl ether; β-aminoethylvinyl sulfide: N-monomethyl-β-aminoethylvinyl ether or sulfide; N-monoethyl-β-amino-ethylvinyl ether or sulfide; and N-monomethyl-3-aminopropylvinyl ether or sulfide.

2) Acrylamide or acrylic esters, such as those represented by the formula II.

**Chemical formula 1**

$$H_2C=C(R)\overset{\overset{\displaystyle O}{\|}}{C}-(X)_n-A-NR^{*}R^{0} \qquad (II)$$

In the formula II,

R is H or $CH_3$;
n is 0 or 1;
X is O or N(H); and if n is 0, A is $O(CH_2)x$[X is 2 - 3] or (O-alkylene)y;[O-alkylene)y is a poly(oxyalkylene) group having a molecular weight 88 - 348, and the alkylene groups may be same or different ethylene or propylene group]; and if n is 1, A is an alkylene group having 2 - 4 carbon atoms;
R* is H, methyl or ethyl group;
$R^0$ is H, phenyl, benzyl, methylbenzyl, cyclohexyl or $C_1$ - $C_6$ alkyl group.

Followings are available as the examples of the compounds represented by the chemical formula II : dimethylaminoethyl acrylate or methacrylate; β-aminoethyl acrylate or methacrylate; N-β-aminoethyl acrylamide or methacrylamide; N-(monomethylaminoethyl)acrylamide or methacrylamide; N-(mono-n-butyl)-4-aminobutyl acrylate or methacrylate; methacryloxyethoxyethylamine; and acryloxypropoxypropylamine.

3) N-Acryloxyalkyl-oxazolidine and N-acryloxyalkyltetrahydro-1,3-oxazine, and compounds corresponding to the above-said oxazolidine and oxazine where the "alkyl" linkage has been substituted by alkoxyalkyl group and poly (alkoxyalkyl) group. All these compounds are included in the following formula III.

Chemical formula 2

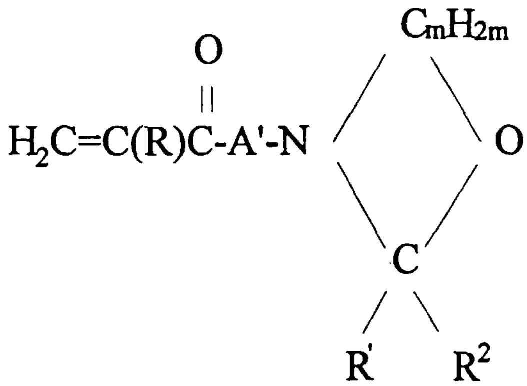

(III)

In the formula III,

R is H or $CH_3$;
m is an integer 2 - 3;
R' is selected from a group comprising hydrogen, phenyl group, benzyl group and $C_1$ - $C_{12}$ alkyl groups if it is not linked directly to $R^2$;
$R^2$ is selected from a group comprising hydrogen and $C_1$ - $C_4$ alkyl groups if it is not linked directly to R';
R' and $R^2$, if they are directly linked together, form a 5 - 6 carbon ring with the attached carbon atom of the ring shown in the above formula. Thus, R' and $R^2$, if they are linked together, are selected from a group comprising pentamethylene and tetramethylene groups;
A' is $O(CmH_2m)$ - or (O-alkylene)n group in which (O-alkylene)n group is a poly(oxyalkylene) group having a molecular weight 88-348, and the alkylene groups may be same or different ethylene or propylene group.

The compounds of the formula III may be hydrolyzed into secondary amines under various conditions. Hydrolysis yields the compound having the following formula IV.

Chemical formula 3

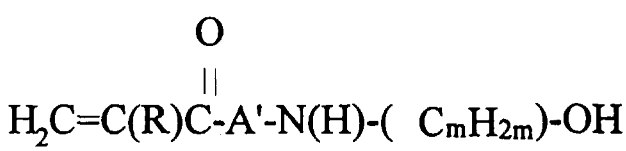

(IV)

Compounds of the above-said formula III have been disclosed in the specification of U.S. Patent No. 3,037,006 and U.S. Patent No. 3,502,627 owned by the licensee common to this application, and also in the specification of the corresponding foreign patent application and specification of the corresponding foreign patents, and monomeric compounds disclosed in such specifications can be used for production of the copolymers which are to be used in the composition of this invention.

Followings are available as the examples of the compounds of the formula III: oxazolidinylethyl methacrylate; oxazolidinylethyl acrylate; 3-(γ-methacryloxypropyl)-tetrahydro-1,3-oxazine; 3-(β-methacryloxyethyl)-2,2-pentamethylene oxazolidine; 3-(β-methacryloxyethyl)-2-methyl-2-propyl oxazolidine; N-2-(2-acryloxyethoxy)ethyl oxazolidine; N-(2-methacryloxyethoxy)ethyl oxazolidine; N-2-(2-methacryloxyethoxy)-ethyl-5-methyl oxazolidine; N-2-(2-acryloxyethoxy)ethyl-5-methyl oxazolidine; 3-[2-(2-methacryloxyethoxy)ethyl]-2,2-pentamethylene oxazolidine; 3-[2-(2-methacryloxyethoxy)ethyl]-2,2-dimethyl oxazolidine; and 3-[2-(2-methacryloxyethoxy)ethyl]-2-phenyl oxazolidine.

4) Polymers of the monomers that can form amines easily by hydrolysis are useful for formation of the polymers

of the amine-containing components of this binder composition. Examples of such monomers are acryloxy ketimines and aldimines such like those represented by the following formula V and VI.

Chemical formula 4

$$H_2C{=}C(R)\text{-}COOA''\ N{=}Q \qquad (V)$$

$$H_2C{=}C(R)\ \text{-}CO(D)_{n''\text{-}1}\text{-}(B)_{n'\text{-}1}\ \text{-}(A^{o})_{n^{o}\text{-}1}\ \text{-}N{=}Q \qquad (VI)$$

In the formula V and VI,

R is H or $CH_3$; and
Q is selected from the group comprising the following;

Chemical formula 5

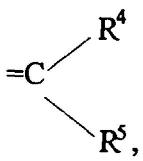

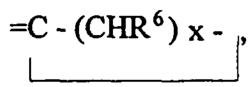

, and $=CHR^3$

$R^6$ is H or, if it is in one $CHR^6$ unit, may be a methyl group;
$R^5$ is selected from a group comprising $C_1$ - $C_{12}$ alkyl groups and cyclohexyl group;
$R^4$ is selected from a group comprising $C_1$ - $C_{12}$ alkyl groups and cyclohexyl group;
$R^3$ is selected from a group comprising phenyl group, halophenyl group, $C_1$ - $C_{12}$ alkyl groups, cyclohexyl group and $C_1$ - $C_4$ alkoxyphenyl groups;
A" is $C_1$ - $C_{12}$ alkylene group;
A°, B and D are same or different oxyalkylene groups that have the formula - $OCH(R^7)\text{-}CH(R^7)$ [where, $R^7$ is H, $CH_3$ or $C_2H_5$];
x is an integer 4 - 5;
n° is an integer 1 - 200;
n' is an integer 1 - 200;
n" is an integer 1 - 200; and
n° - 1, n' - 1, and n" - 1 have a value 2 - 200.

Examples of the compounds represented by the formula V and VI are as follows: 2-[4-(2,6-dimethylheptylidene)-amino]-ethylmethacrylate;3-[2-(4-methylpentylidine)-amino]-propyl methacrylate; β-(benzylideneamino)ethyl methacrylate; 3-[2-(4-methylpentylidene)-amino]-ethylmethacrylate; 2-[4-(2,6-dimethylheptylidene)-amino]-ethyl acrylate; 12-(cyclopentylidene-amino)-dodecyl methacrylate; N-(1,3-dimethylbutylidene)-2-(2-methacryloxyethoxy)-ethylamine; N-(benzylidene)-methacryloxyethoxyethylamine; N-(1,3-dimethylbutylidene)-2-(2-acryloxyethoxy)-ethylamine; and N-(benzylidene)-2-(2-acryloxyethoxy) ethylamine.

Hydrolysis of the compounds represented by the formula V and VI in acidic, neutral or alkaline aqueous medium yields a primary amine or its salt where -N=Q in the formula is converted into $NH_2$ and O=Q. Compounds represented by the formula V and VI have been disclosed in the specifications of U.S. Patents No. 3,037,969 and No. 3,497,485, and any monomeric compounds disclosed in such specifications can be used for preparation of the copolymers which are used in the water-soluble polymer portion of the composition of this invention.

The preferred amine-containing polymers of this invention are water-soluble. The word "water-soluble" means that the polymer is completely soluble in water, either in the form of free-base neutral or salt. This solubility preferably

covers the entire pH range, and more preferably in a pH range from 4 to 10. Even though the water-soluble amine-containing polymers which are insoluble at higher pH but are soluble or partially soluble in acidic pH, particularly in pH of 4-7, may be useful, they are not as desirable as those described above. "Partially soluble" means that a part of the polymer is soluble in water or the entire polymer exists as a miscelle of molecules or as aggregates, generally the polymer dissolves as a highly swollen aggregates in water. The latter case is often called "colloidal solution". It is desirable that majority of the polymer is soluble in acidic pH. As explained before, the water-soluble amine-containing polymers of this invention include both the completely soluble polymers and partially soluble polymers.

Even though the water-insoluble amine-containing polymers having a molecular weight of the lower molecular weight in the range of the corresponding water-soluble polymers molecular weight may be useful, they are not as desirable as those described above. These water-insoluble amine-containing polymers have the same function as the water-soluble polymers. When these water-insoluble polymers are used instead of the water-soluble polymers, the initial cohesive strength of the anionically stabilized latex is improved. However, normally the extent of improvement is not as great as the improvement achieved by water-soluble polymers.

Generally, at least 20% by weight of the amine-containing polymers from the monomers belonging to the above-said categories 1,2,3 and 4 can be obtained by solution polymerization in neutral, alkaline or acidic aqueous medium, depending on the type of polymer. Generally speaking, this polymerization is carried out in aqueous medium containing a small amount of organic or inorganic acid, such as acetic acid or hydrochloric acid. The amine-containing polymer contains up to 80% by weight of the copolymer(s) of one, two or more monomers, such as methyl acrylate, acrylamide, methacrylamide, and quaternary ammonium salts derived from amine monomers, such as 2-methacryloxyethyltrimethylammonium chloride. A small amount of relatively insoluble comonomer(s) can be used to obtain the water-soluble polymers. Insoluble polymers may contain a larger amount of such comonomers. Examples of such monomers are esters made of $C_1$ - $C_{18}$ alcohol and acrylic acid, esters made of $C_1$ - $C_{18}$ alcohols, particularly $C_1$ - $C_4$ alkanol, and methacrylic acid, styrene, vinyltoluene, vinyl acetate, vinyl chloride, vinylidene chloride, substituted styrene, butadiene, substituted butadiene, ethylene, and nitriles and amides of acrylic acid or methacrylic acid. Specific monomer or monomers to be used for production of a certain amine-containing polymer depends on the proportion of the amine-containing monomer which is used for production of the copolymer. Preferably, a comonomer that has a relatively high solubility in water is used for production of the water-soluble polymer. These polymers, therefore, are the polymers or copolymers of cationic, and if so desired, nonionic vinyl monomer(s). Examples of the cationic monomer are amines, imines and quaternary ammonium salts. Other described monomers are nonionic. Therefore, these water-soluble copolymers do not contain other acidic groups, except a trace amount of acidic groups that may exist due to the impurities existed in the monomer feedstock or due to minor degree of hydrolysis that might occur during synthesis, storage or use.

Viscosity average molecular weight of the insoluble amine-containing polymer is from 5,000 to 100,000, and 15,000 - 90,000 range is preferred. Molecular weight of the water-soluble polymers may reach a wide range. Typically, its viscosity average molecular weight is from 5,000 to 300,000, and 40,000 - 100,000 range is preferred. Quantity of amine-containing polymer is from 0.1 to 20% by weight, preferably 0.3 - 5% by weight, based on the total combined weight of the anionic latex polymer and amine-containing polymer.

The water-soluble amine-containing polymer includes both the perfectly soluble polymers and partially soluble polymers. The terminology "water-soluble amine-containing polymer" describes the perfectly soluble polymers which may be in free base form, neutral form or in salt form. While some polymers are soluble over the entire pH range, other polymers are soluble, for example, at pH of 5 - 10. Other amine-containing polymers are generally insoluble at high pH, but they are soluble or partially soluble in acidic pH range, particularly in a pH range of from 5 to 7. The terminology "partially soluble" means that a part of the polymer is soluble in water or the entire polymer can be dissolved as a miscelle of molecules or as aggregates, i.e. generally it is dissolved as aggregates which are swollen by water to a high degree. The latter situation is often called "colloidal solution". It is desirable that majority of the polymer is soluble at acidic pH.

Amine-containing polymers, as generally known in this technological field, can be obtained by solution polymerization in neutral, alkaline, or acidic aqueous medium, depending on the type of polymer to be formed, as described, for example, in U.S. Patent No. 4,119,600. Generally speaking, this polymerization is carried out in an aqueous medium that contains a small amount of organic or inorganic acid, such as acetic acid or hydrochloric acid. The amine-containing polymer contains up to 80% weight % of copolymer(s) made from one, two or more monoethylenic unsaturated monomers such as methyl acrylate, acrylamide and methacrylamide. A small amount of relatively insoluble comonomers may be used also to obtain the water-soluble polymer. The water-insoluble polymer may contain a large amount of such comonomers. Examples of such monomer are esters made of $C_1$ - $C_{18}$ alcohols and acrylic acid, esters made of $C_1$ - $C_{18}$ alcohols, particularly $C_1$ - $C_4$ alkanols, and methacrylic acid, styrene, vinyl toluene, vinyl acetate, vinyl chloride, vinylidene chloride, substituted styrene, butadiene, substituted butadiene, ethylene, and nitriles and amides of acrylic acid or methacrylic acid. Specific comonomer or comonomers to be used for production of specific amine-containing polymer depend(s) on the proportion of amine-containing monomer which is to be used for production

of such copolymer. These polymers, therefore, are the polymers or copolymers of cationic and, if so desired, nonionic vinyl monomers. Example of cationic monomers are amines and imines, and the other described monomers are nonionic. Therefore, these water-soluble copolymers do not contain other acidic groups except a trace amount of acidic group that might have come from the contaminant existed in the monomer feedstock or might have existed due to minor degree of hydrolysis during synthesis, storage or use.

Volatile base

The paint composition of this invention requires a volatile base. Type and quantity of the volatile base to be used must be sufficient enough to avoid interaction with the anionically stabilized latex polymer and other anionic components in this quickset paint composition as the pH of the composition is raised to the point where the amine functional group of the amine-containing polymer will be nonionized (deprotonized), typically at least pH 5, and preferably pH 7 -9.

A starting point estimate of the amount of volatile base required to reach this point can be calculated from the number of equivalents of base required to neutralize the entire acid groups in the latex (i.e. acid group of the copolymerized monomers having carboxylic group, surface active agent and initiator) and the conjugate acid of the amine base. If the amines were not thoroughly deprotonized, the emulsion will show an observable tendency to instability regardless of time, such as for example increase of viscosity and "particle rafting" that can be observed with a microscope, an early stage of aggregation/gelatin. One equivalent of volatile base (the standard is or being the titrated amount of latex acid and polyamine) is normally sufficient to form a stable system. For a longer time of stability, a higher level of volatile base (3 - 4 equivalents) will be needed. While a higher amount of volatile base may be used within the scope of this invention, in such case "quicksetness" of the paint may decline. If the equipment being used in this production method provides an opportunity to lose the volatile base by evaporation at any stages from the time when the volatile base was added until the product was packed in a sealed container, the amount of volatile amine to be added to the production equipment must be increased in such a way to compensate for its loss.

After coating, the volatile base evaporates and the pH of the composition drops. As the pH of the composition drops down to the point at which protonization of the amine functional group starts to occur, the amine functional group will become cationic. While this quicksetness is believed to start by the conversion of amine functional group into a cation in the presence of an anionically stabilized emulsion polymer, exact mechanism that creates such quicksetness has not been established. Therefore, the present inventors do not intend to bind the quicksetness by a theory of an exact mechanism.

Although it is not intended to limit its scope, examples of appropriate base are ammonia, morpholine, alkylamines, 2-dimethyl aminoethanol, N-methyl morpholine, ethylenediamine and their mixtures, and preferred base is ammonia.

Preferred equivalency ratio of the amines and the acid in the latex polymer is amine/acid = 0.5 - 1.0.

Furthermore, the paint composition of this invention contains a pigment. Titanium dioxide or iron oxides can be used as the pigment. Preferred pigment is titanium dioxide. The titanium dioxide being used favorably in this invention is a rutile type. Even though satisfactory gloss can be obtained with any types of titanium dioxide being used in the paint composition of this invention, a high gloss type is favored because it can give a better effect of this invention.

With the paint composition of this invention, pigment volume concentration (PVC) must be 30 or lower, and total solid concentration must be 40 - 80 weight %. Preferred PVC is 10 - 25, and 15 - 22 is even more desirable. Preferred total solid concentration is 50 - 65% by weight, and 55 - 60% by weight is even more desirable. If PVC is too high, gloss will be adversely affected. If it is too low, opacifying properties will decline. And, if total solid concentration is too high, workability will suffer and production of the paint and coating will be difficult. On the other hand, if total solid concentration is too low, a desired quicksetness and gloss can not be achieved. Incidentally, the above-said PVC value is that only for the titanium dioxide. And, other inorganic or organic pigments may be used to replace the titanium dioxide or such inorganic or organic pigments may be used together with titanium dioxide. For example, hollow pigment, ultrafine particulate pigment, or colored pigment and so on may be included.

Preferably, the paint composition of this invention contains additionally at least one kind of lower alcohols as solvent. The solvent is the low-boiling lower alcohols that have a boiling point of lower than 10°C, and preferably is at least one kind of solvent selected from a group comprising methanol, ethanol, and isopropyl alcohol.

Most desirable solvent is methanol. The amount of solvent to be added may change with the type of solvent and composition of the latex, but generally it is 0.5 - 10% by weight, preferably 1.0 - 5% by weight. 1.0 - 3.0% by weight is most desirable. Quicksetness can be improved without damaging the gloss, by using the above-said solvent.

Effect of this invention is achieved when every essential requirements described above were met. Naturally, use of solvent and use of titanium dioxide are known in the prior art, but a system that has a low PVC and high total solid concentration like this invention is not known for the system that has quicksetness. And, a paint composition in which at least one kind of solvent selected from a group comprising lower alcohols, preferably methanol, ethanol and

isopropyl alcohol was added to such system, was not known before.

In the paint composition of this invention, it is not desirable to use a wetting agent during formation of a paint. Quicksetness of the paint will improve, when no wetting gent is used. Generally, even though a wetting agent is used to improve dispersity of pigment, use of such wetting agent is not required in the paint composition of this invention. Thus, with the paint composition of this invention, a high gloss coat can be obtained without using a wetting agent.

Besides what has been described above, ordinary paint components such as extender, dispersing agent, surface active agent, rheology modifier, thickener, drying retarders, antifoaming agent, coloring agent, wax, preservative, heat stabilizer, solvent, anti-skinning agent, driers, etc. can be used in the paint composition of this invention.

In case of selecting the types and quantities of additives, one must be careful enough to avoid adjusting the pH to the extent that storage stability will be suppressed by the pH of the paint composition, or to the extent that the pH after coating does not drop enough to the extent to initiate protonization of the polyamine.

Typically, the aqueous paint composition of this invention is prepared in such a way to have a viscosity from 100 to 10,000 centipoises.

One can obtain a paint that will become tack free at 15 minutes after application and has a 60° gloss of 75 or more when the paint composition of this invention is coated as shown in the examples and held at 23°C and 60% humidity.

The aqueous paint composition of this invention may contain water-soluble or water-dispersible multivalent metal in a form such as metallic ion, salt, complex or oxide. While the multivalent metal may be added after the paint composition has been prepared, it is desirable to add other components after the latex polymer was modified by a multivalent metal. With inclusion of water-soluble or water-dispersible multivalent metal, the paint composition can be made to have a better quicksetting property.

As the method of modification, even though powder of multivalent metal may be dispersed and added to the aqueous paint composition, it is desirable to convert first the multivalent metal into a multivalent metal ion complex or to form a salt from the multivalent metal ion and its counter ion, to make the multivalent metal soluble or dispersible in water. The multivalent metal ion complex can be solubilized in an alkaline solution, such as a dilute ammonia water having pH = 9 - 10. A latex polymer can be modified with a multivalent metal by adding a water-soluble or water-dispersible multivalent metal to the latex polymer which is held at a temperature 30 - 50°C.

Multivalent metal ion such as calcium, aluminum, magnesium, zinc, barium, strontium, etc. can be used. Complexes of multivalent metal ion, such as zinc hexammonia, zinc ammonium bicarbonate, etc. and salts made of multivalent metal ion and its counter ion such as chloride ion, acetate ion, or bicarbonate ion, can be used also. Zinc is the preferred multivalent metal.

Multivalent metal ion, salt, complex or oxide is useful in a quantity of about 0.1 - 10 % by weight, based on the weight of the solid components of the polymer in the latex. Preferred level, based on the weight of the polymer solid in the latex, is from about 0.3% by weight to about 2.0% by weight.

Such paint composition of this invention can be used as the paint to coat a wall or as a topcoat in a multilayer coating that requires quicksetting property. And, since it does not have tack and does not soil easily, the paint composition of this invention can be used also as a single layer elastomeric coating. Furthermore, it can be used as a quickset indoor or outdoor emulsion paint such as traffic paint, roof paint, paint for ordinary buildings, and paint to coat the interior wall of a bathroom, etc..

This invention is explained further by way of the following examples which are merely illustrations and in no way limit the scope of this invention.

<u>Example</u>

<u>Preparation of monomer mixture</u>

A 58% solution of polyoxyethylenenonylphenyl ether ammonium sulfate in deionized water and a monomer mixture having BA/MMA/MAA ratio (by weight) = 45/53/2 were added slowly to the agitated solution, to prepare an emulsified monomer mixture.

<u>Polymerization operation, preparation of emulsion polymer</u>

A solution containing polyoxyethylenenonylphenyl ether ammonium sulfate and deionized water was added in a proper reactor equipped with a thermometer, a cooling device, and an agitator, and it was heated to 80 - 85°C.

An aqueous sodium carbonate solution and then a part of the above-said monomer emulsion were added to this reactor, and temperature was adjusted to 80 - 82°C. Then, the entire aqueous sodium persulfate (SPS) solution (a solution prepared by dissolving SPS in deionized water) was added to this reactor. Within about 5 minutes, initiation of polymerization was confirmed by elevation of temperature by 3 - 5°C and change of the external appearance of the

reaction mixture. After generation of heat had stopped, the remainder of the monomer mixture and aqueous sodium persulfate (SPS) solution (a solution prepared by dissolving SPS in deionized water) were added slowly to the reactor. Addition was made in 2 - 3 hours so that the heat being generated by the polymerization reaction could be removed by cooling. Reaction temperature for the polymerization was maintained at 80 - 82°C by cooling, if necessary. After finish adding, the reactor containing the reaction mixture and the feeding pipe were rinsed with deionized water and the rinse was added to the reactor, and then it was cooled down to room temperature. Ammonia was added to adjust the pH to 9.5 - 10. 1.25% of polyoxazolidinylethyl methacrylate (solid content = 27.5%) based on the weight of the content of solid in the emulsion polymer, which was a water-dispersible amine functional group-containing polymer was added to the thus-obtained emulsion, to obtain the Emulsion 1. Using this Emulsion 1, paint was prepared, using the composition illustrated in Table 1. Gloss and setting property of the paints are shown in Table 2.

And, Emulsion 2 was prepared by the identical procedure, using BA/MMA/MAA = 33/65/2. Protocol of the paint composition is shown in Table 1 and setting property of the thus-obtained paint is shown in Table 2. Incidentally, in Examples 13 and 14, setting property was measured at 22°C and 75% RH.

<u>Testing method of gloss</u>

Prepared paint was coated on a glass plate, using a 5 mil applicator, and it was left to dry at room temperature for 1 week. Reflectivity at incident angle and reflect angle of 20° and 60° were measured.

TABLE I

| Sample No. | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| [Grind] | | | | | | | | | | | | | | | |
| Water | | 4.36 | 4.36 | 4.36 | 4.36 | 4.36 | 4.36 | 4.36 | 4.25 | 4.25 | 4.36 | 4.36 | 4.36 | 4.01 | 4.01 |
| Tamol (SIC) 901 | | 0.39 | 0.39 | 0.39 | 0.39 | 0.39 | 0.39 | 0.39 | 0.39 | 0.39 | 0.39 | 0.39 | 0.39 | 0.72 | 0.72 |
| Triton CF-10 | | - | - | - | - | - | - | 0.20 | - | - | - | - | - | - | - |
| Dehydran (SIC) 1620 | | 0.12 | 0.12 | 0.12 | 0.12 | 0.12 | 0.12 | 0.12 | 0.12 | 0.12 | 0.12 | 0.12 | 0.12 | 0.11 | 0.11 |
| Ti-Pure R-700 | | 23.25 | 23.25 | 23.25 | 23.25 | 23.25 | 23.25 | 23.25 | - | - | - | - | 23.25 | 21.66 | 21.66 |
| Ti-Pure R-706 | | - | - | - | - | - | - | - | 23.25 | 23.25 | - | - | - | - | - |
| Ti-Pure R-900 | | - | - | - | - | - | - | - | - | - | 23.25 | 23.25 | - | - | - |
| | | | | | | | | | | | | | | | |
| [Letdown] | | | | | | | | | | | | | | | |
| Emulsion 1 | | 66.35 | 66.35 | 66.35 | 66.35 | 66.35 | 66.35 | 66.35 | 66.35 | 66.35 | 66.35 | 66.35 | 45.34 | 64.97 | - |
| Emulsion 2 | | - | - | - | - | - | - | - | - | - | - | - | - | - | 64.97 |
| Methanol | | - | 1.93 | 1.93 | 1.93 | - | - | 1.93 | 1.93 | 1.93 | 1.93 | 1.93 | 1.93 | 1.65 | 1.65 |
| Methyl carbitol | | - | - | - | - | 1.93 | - | - | - | - | - | - | - | - | - |
| Propyleneglycol | | - | - | - | - | - | 1.93 | - | - | - | - | - | - | - | - |
| Texanol | | 3.32 | 3.32 | 3.32 | 3.32 | 3.32 | 3.32 | 3.32 | 3.32 | 3.32 | 3.32 | 3.32 | 2.27 | 6.50 | 6.50 |
| Dehydran (SIC) 1620 | | 0.23 | 0.23 | 0.23 | 0.23 | 0.23 | 0.23 | 0.23 | 0.23 | 0.23 | 0.23 | 0.23 | 0.23 | 0.22 | 0.22 |
| RM-8W | | 0.05 | 0.05 | 0.14 | 0.19 | 0.09 | 0.09 | 0.09 | 0.09 | 0.23 | 0.09 | 0.05 | 0.05 | - | - |
| RM-2022NPR | | - | - | - | - | - | - | - | - | - | - | - | - | 0.17 | 0.09 |
| Water | | 1.93 | 0.00 | 6.04 | 12.32 | 0.00 | 0.00 | 0.00 | 0.00 | 12.09 | 0.00 | 12.32 | 3.48 | - | - |
| | | ------- | ------- | ------- | ------- | ------- | ------- | ------- | ------- | ------- | ------- | ------- | ------- | ------- | ------- |
| | | - | - | - | - | - | - | - | - | - | - | - | - | - | - |
| | | 100.00 | 100.00 | 106.13 | 112.46 | 100.04 | 100.04 | 100.24 | 99.93 | 112.16 | 100.04 | 112.32 | 81.42 | 100.01 | 99.93 |
| | PVC | 16.6 | 16.6 | 16.6 | 16.6 | 16.6 | 16.6 | 16.6 | 16.6 | 16.6 | 16.6 | 16.6 | 22.0 | 15.5 | 15.5 |
| | WS | 56.4 | 56.4 | 53.2 | 50.2 | 56.4 | 56.3 | 56.5 | 56.5 | 50.6 | 56.4 | 50.2 | 56.4 | 54.2 | 54.2 |
| | Initial KU | 85 | 80 | 83 | 80 | 85 | 86 | 82 | 83 | 80 | 86 | 82 | 83 | 80 | 82 |
| | ICI | 0.7 | 0.7 | 0.5 | 0.4 | 0.8 | 0.6 | 0.6 | 0.7 | 0.4 | 0.6 | 0.3 | 0.5 | 1.1 | 0.9 |
| | pH | 9.8 | 9.8 | 9.8 | 9.7 | 9.8 | 9.8 | 9.8 | 9.7 | 9.6 | 9.8 | 9.7 | 9.8 | 9.7 | 9.7 |

TABLE 2

| Sample No. | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Gloss | | | | | | | | | | | | | | | |
| | 20 degrees | 56 | 57.2 | 49.9 | 43.7 | 52.4 | 53.2 | 57 | 40.1 | 20.3 | 26.1 | 17.4 | 45.5 | 54.5 | 51.3 |
| | 60 degrees | 81.1 | 82.2 | 76 | 74.4 | 78 | 78 | 82 | 72.2 | 66.9 | 60.2 | 56.5 | 75.2 | 80.6 | 80.0 |
| Curing property | | | | | | | | | | | | | | | |
| | 23degrees C. /60%RH | | | | | | | | | | | | | | |
| | 0 (minute) | - | 0 | 0 | 0 | 0 | 0 | 0 | 0 | 0 | 0 | 0 | - | 0 | 0 |
| | 5 | - | 1 | 0 | 0 | 0 | 0 | 0 | 0 | 0 | 0 | 0 | - | 1 | 3 |
| | 10 | - | 3 | 1 | 0 | 1 | 1 | 2.5 | 3 | 0 | 3 | 0 | - | 1 | 4 |
| | 15 | - | 4.5 | 3 | 0 | 2 | 1.5 | 4 | 4 | 0 | 4 | 1 | - | 3 | 5 |
| | 20 | - | 4.5 | 3 | 1.5 | 3 | 3 | 4.5 | 5 | 1 | 5 | 1 | - | 4 | - |
| | 25 | - | 4.5 | 4 | 3 | 4 | 4 | 4.5 | - | 3 | - | 3 | - | - | - |
| | 30 | - | 5 | 4.5 | 4 | 4.5 | 4.5 | 5 | - | 5 | - | 5 | - | - | - |
| | | | | | | | | | | | | | | | |
| | 6 degrees C. /82%RH | | | | | | | | | | | | | | |
| | 0 (minute) | 0 | 0 | 0 | 0 | 0 | 0 | 0 | 0 | 0 | 0 | 0 | 0 | - | - |
| | 10 | 0 | 0 | 0 | 0 | 0 | 0 | 0 | 1 | 0 | 1 | 0 | 0 | - | - |
| | 20 | 0 | 0 | 0 | 0 | 0 | 0 | 0 | 2 | 0 | 1 | 0 | 0 | - | - |
| | 25 | - | 1 | 0 | 0 | 0 | 0 | 0 | - | - | - | - | - | - | - |
| | 30 | 0 | 1 | 0 | 0 | 0 | 0 | 0 | 3 | 0 | 2 | 0 | 1 | - | - |
| | 35 | - | 2 | 0 | 0 | 1 | 0 | 1 | - | - | - | - | - | - | - |
| | 40 | 1 | 3 | 0 | 0 | 2 | 0 | 1 | 5 | 0 | 5 | 0 | 3 | - | - |
| | 45 | - | 4 | 0 | 0 | 2 | 0 | 3 | - | - | - | - | - | - | - |
| | 50 | 3 | 4 | 0 | 0 | 2.5 | 0 | 4 | - | 1 | - | 1 | 4 | - | - |
| | 60 | 4 | 5 | 1 | 0 | 3 | 1 | 5 | - | 2 | - | 2 | 5 | - | - |
| | 70 | 4.5 | 5 | 3 | 1 | 4.5 | 2 | 5 | - | 3 | - | 3 | - | - | - |
| | 80 | - | - | 4 | 2 | - | 3 | - | - | 4 | - | 4 | - | - | - |
| | 90 | - | - | 5 | 3 | - | 4.5 | - | - | 4.5 | - | 4.5 | - | - | - |
| | 100 | - | - | - | 4.5 | - | 5 | - | - | 5 | - | 5 | - | - | - |

Evaluation of setting property

Paint was coated on a glass plate, using a 6 mil applicator, and dried under the illustrated condition. State of dryness was evaluated by following the evaluation standard indicated below.

0 = Not dry
1 = Felt dry when touched by a finger (when the coated surface was touched by a finger tip, the finger tip was not soiled by the sample)
3 = Half set (when the coated surface was rubbed mildly with a finger tip, no trace of finger mark remained on the coated surface)
5 = Completely set (when the coated surface was rubbed repeatedly and quickly with a finger tip, no trace of finger mark remained on the coated surface)

2 and 4 represent, respectively, the cases where the condition between 1 and 3, and between 3 and 5 existed.
Tamol (SIC) is a dispersing agent from Rohm and Haas Company.
Triton is a wetting agent from Union Carbide Corporation (UCC).
Dehydran (SIC) is an antifoam from San Nopco.
RM-8W and RM-2020NPR are thickener from Rohm and Haas Company.
In Table 2, KU indicates the viscosity measured by a Stomer viscosimeter, and ICI is the viscosity (unit : poises) measured by an ICI viscosimeter.

Comparative Example 1

A polymer was prepared by the procedure of Example 1, without adding the water-dispersible amine functional group-containing polymer, and the paints were prepared by following the protocols indicated below, and their setting property was measured. Results are presented in Table 3.

| | Example 1 | Comparative Example 1 |
|---|---|---|
| Grind | | |
| Water | 4.32 | 4.32 |
| Tamol (SIC)910 | 0.75 | 0.75 |
| Dehydran(SIC)1620 | 0.11 | 0.11 |
| Ti-Pure R-700 | 22.32 | 22.32 |
| Letdown | | |
| Emulsion | 66.96 | |
| Emulsion w/o | | 66.12 |
| Methanol | 1.70 | 1.70 |
| Texanol | 3.35 | 3.35 |
| Dehydran(SIC)1620 | 0.22 | 0.22 |
| RM-2020NPR | 0.27 | 0.31 |
| Total | 100.00 | 99.20 |
| PVC | 15.5 | 15.5 |
| WS | 55.8 | 55.8 |

Table 3

| | Example 1 | Comparative Example 1 |
|---|---|---|
| 5°C/80% RH | | |
| 0 (minute) | 0 | 0 |
| 5 | 0 | 0 |
| 10 | 0 | 0 |

Table 3 (continued)

| | Example 1 | Comparative Example 1 |
|---|---|---|
| 5°C/80% RH | | |
| 15 | 1 | 0 |
| 20 | 1.5 | 0 |
| 25 | 3 | 1 |
| 30 | 4 | 1 |
| 35 | 4.5 | 2 |
| 20°C/50% RH | | |
| 0 (minute) | 0 | 0 |
| 2 | 0 | 0 |
| 4 | 1 | 0 |
| 6 | 1.5 | 0 |
| 8 | 3 | 1 |
| 10 | 4.5 | 1 |
| 12 | 5 | 2 |

**Claims**

1. A paint composition comprising an anionically stabilized latex polymer, a water-soluble or water-dispersible polymer formed from a mixture of monomers containing at least 20% by weight of amine functional group-containing monomer, a sufficient amount of volatile base to raise the pH of the composition to the point where essentially all polyfunctional amine will be in nonionic state, and pigment, wherein the paint composition has a pigment volume concentration of 30 or less and total solids concentration of 40 - 80% by weight, and wherein the quantity of amine-containing polymer is from 0.1 to 20% by weight based on the total combined weight of the anionic latex polymer and amine-containing polymer.

2. The paint composition according to Claim 1 further comprising a solvent selected from the group comprising methanol, ethanol, and isopropyl alcohol.

3. The paint composition according to Claim 2 where the amount of the solvent is 0.5 - 10% by weight, based on the weight of the paint composition.

4. The paint composition according to Claim 2 where the solvent is methanol or ethanol.

5. The paint composition according to Claim 1 where the pigment is titanium dioxide.

6. The paint composition according to Claim 1 where the PVC (pigment volume concentration) is from 10 to 25.

7. The paint composition according to Claim 1 where the total solids concentration is 50 - 65% by weight.

8. The paint composition according to Claim 1 where Tg of the latex polymer is 0°C - 70°C.

**Patentansprüche**

1. Lackzusammensetzung, umfassend einen anionisch stabilisierten Polymerlatex, ein wasserlösliches oder wasserdispergierbares Polymer, gebildet aus einem Gemisch von Monomeren, enthaltend mindestens 20 Gew.-% eines eine funktionale Amingruppe enthaltenden Monomers, eine Menge einer flüchtigen Base, die ausreichend ist, den pH-Wert der Zusammensetzung auf den Punkt anzuheben, bei welchem im wesentlichen sämtliches polyfunktionales Amin im nicht-ionischen Zustand vorliegt, und ein Pigment, wobei die Lackzusammensetzung eine Pigmentvolumenkonzentration von 30 oder weniger und eine Gesamtfeststoffkonzentration von 40 bis 80 Gew.-

% aufweist, und wobei die Menge an Amin-enthaltendem Polymer 0,1 bis 20 Gew.-%, bezogen auf das kombinierte Gesamtgewicht des anionischen Polymerlatex und des Amin-enthaltenden Polymers, beträgt.

2. Lackzusammensetzung nach Anspruch 1, weiter umfassend ein Lösungsmittel, ausgewählt aus der Gruppe, umfassend Methanol, Ethanol und Isopropylalkohol.

3. Lackzusammensetzung nach Anspruch 2, wobei die Menge des Lösungsmittels 0,5 bis 10 Gew.-%, bezogen auf das Gewicht der Lackzusammensetzung, beträgt.

4. Lackzusammensetzung nach Anspruch 2, wobei das Lösungsmittel Methanol oder Ethanol ist.

5. Lackzusammensetzung nach Anspruch 1, wobei das Pigment Titandioxid ist.

6. Lackzusammensetzung nach Anspruch 1, wobei die PVC (Pigmentvolumenkonzentration) 10 bis 25 beträgt.

7. Lackzusammensetzung nach Anspruch 1, wobei die Gesamtfeststoffkonzentration 50 bis 65 Gew.-% beträgt.

8. Lackzusammensetzung nach Anspruch 1, wobei die Tg des Polymerlatex 0°C bis 70°C ist.

**Revendications**

1. Composition de peinture comprenant un latex polymère à stabilisation anionique, un polymère soluble dans l'eau ou dispersible dans l'eau formé à partir d'un mélange de monomères contenant au moins 20 % en poids d'un monomère contenant des groupes à fonctionnalité amine, une quantité suffisante d'une base volatile pour élever le pH de la composition à une valeur pour laquelle pour ainsi dire la totalité de l'amine polyfonctionnelle se trouve dans un état non ionique, et un pigment, où la composition de peinture a une concentration de pigment en volume de 30 ou moins et une teneur totale en extrait sec de 40 à 80 % en poids, et où la quantité du polymère contenant une amine est de 0,1 à 20 % en poids par rapport au poids total combiné du latex polymère anionique et du polymère contenant une amine.

2. Composition de peinture selon la revendication 1, qui comprend en outre un solvant choisi dans le groupe comprenant le méthanol, l'éthanol et l'alcool isopropylique.

3. Composition de peinture selon la revendication 2, dans laquelle la quantité du solvant est de 0,5 à 10 % en poids par rapport au poids de la composition de peinture.

4. Composition de peinture selon la revendication 2, dans laquelle le solvant est le méthanol ou l'éthanol.

5. Composition de peinture selon la revendication 1, dans laquelle le pigment est le dioxyde de titane.

6. Composition de peinture selon la revendication 1, dans laquelle la CPV (concentration de pigment en volume) est de 10 à 25.

7. Composition de peinture selon la revendication 1, dans laquelle la teneur totale en extrait sec est de 50 à 65 % en poids.

8. Composition de peinture selon la revendication 1, dans laquelle la $T_g$ du latex polymère est de 0 à 70°C.